(19) **Europäisches Patentamt / European Patent Office / Office européen des brevets**

(11) **EP 3 010 269 A1**

(12) **EUROPEAN PATENT APPLICATION**
published in accordance with Art. 153(4) EPC

(43) Date of publication:
**20.04.2016 Bulletin 2016/16**

(21) Application number: **13886689.2**

(22) Date of filing: **13.06.2013**

(51) Int Cl.:
*H04W 16/14* (2009.01)   *H04W 16/18* (2009.01)

(86) International application number:
**PCT/JP2013/066386**

(87) International publication number:
**WO 2014/199497 (18.12.2014 Gazette 2014/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Fujitsu Limited**
**Kawasaki-shi, Kanagawa 211-8588 (JP)**

(72) Inventors:
• **ARAI, Hiroaki**
  **Kawasaki-shi**
  **Kanagawa 211-8588 (JP)**
• **SHIMOMURA, Tsuyoshi**
  **Kawasaki-shi**
  **Kanagawa 211-8588 (JP)**
• **TSUTSUI, Masafumi**
  **Kawasaki-shi**
  **Kanagawa 211-8588 (JP)**

(74) Representative: **Hutchison, James**
  **Haseltine Lake LLP**
  **300 High Holborn**
  **London, Greater London WC1V 7JH (GB)**

(54) **USE MANAGEMENT DEVICE AND USE MANAGEMENT METHOD**

(57) A use management apparatus capable of reducing labor of determining propriety of use of a white space by a secondary system is provided. In a use management apparatus (10), a primary system field intensity storage unit (11) stores primary system field intensity, a secondary system field intensity acquisition unit (12) acquires secondary system field intensity on the basis of secondary system information, an input level calculation unit (13) calculates a booster input level by adding the secondary system field intensity to the primary system field intensity, and a use propriety determination unit (14) compares the booster input level with a saturation input level and determines the propriety of use of the white space by the secondary system on the basis of the comparison result.

FIG.2

**EP 3 010 269 A1**

**Description**

Technical Field

The present invention relates to an apparatus and a method for use management.

Background Art

In recent years, wireless traffic continues to increase at a rapid pace, resulting in a growing demand for frequencies that are a limited resource. Under these circumstances, "cognitive radio" is currently under consideration as one of the technologies for achieving effective use of the frequencies. In one example of the cognitive radio, a wireless communication device performs communication by changing its transmission or reception frequency, i.e., by selecting an optimum frequency, in accordance with the radio wave condition around the wireless communication device, to maximize frequency utilization efficiency within limited frequency bands.

As optimum frequencies selected by the cognitive radio, "white spaces" attract attention in particular. "White spaces" refer to frequency bands licensed to but not used by operators who offer specific radio service such as television broadcasting service. Such unused frequency bands are provided, for example, to prevent interference between adjacent frequency channels. Examples of the white spaces may include empty channels in the frequency bands for television broadcasting. Effective use of the white spaces by the cognitive radio can enhance frequency utilization efficiency.

In the cognitive radio using the white spaces, a wireless system which preferentially uses licensed frequency bands may be called a "primary system," and a wireless system which performs communication by using white spaces may be called a "secondary system." Examples of the primary system may include television broadcasting systems, and examples of the secondary system may include broadband wireless access systems.

Citation List

Non Patent Literature

Non Patent Literature 1: S. Haykin, "Cognitive radio: Brain-empowered wireless communications", IEEE Journal on Selected Areas in Communications, Vol. 23, No.2, Feb. 2005
Non Patent Literature 2: FCC, "Third Memorandum Opinion and order" in ET Docket No.04-186, Apr.5, 2012

Summary of invention

Technical Problem

In some houses of televiewers who receive television broadcasts, a "booster" used as an amplifier to amplify received signals may be installed between a receiving antenna and a receiver. The booster is installed in order to compensate transmission loss caused by a cable or a distributor and the like provided between the receiving antenna and the receiver.

However, when a high-power signal is input into the booster, output power of the booster is saturated and a signal output from the booster is distorted thereby. The booster amplifies the signals received over the entire frequency bands of television broadcasts including the white spaces. Accordingly, as higher power is received from the transmitter station of a secondary system using a white space, higher power is received over the entire frequency bands used by the television broadcasts, which causes distortion of signals output from the booster. As a result, it may become difficult to properly view the television broadcasts.

For example, assume a case where a reception channel of a television broadcast is a frequency f1, and a white space to be used by the secondary system is a frequency f2 which is an unoccupied channel in the frequency band including the frequency f1. In this case, the total received power in the frequencies f1 and f2 is amplified by the booster. Accordingly, when the total power is increased due to increased received power in the frequency f2, the output power of the booster is saturated, which causes distortion of signals output from the booster. As a result, it becomes difficult to properly view the television broadcast at the reception channel of the frequency f1.

Therefore, for use of the white space by the second system, it is preferable to determine propriety of use of the white space in consideration of the presence of the booster installed in each house, i.e., in consideration of the influence of the booster so as to ensure proper viewing of television broadcasts. In the past, for use of a white space by the secondary system, each individual house was checked for the presence of the installed booster to determine the propriety of use in consideration of the influence of the booster. Accordingly, determining the propriety of use of the white space by the secondary system incurred much labor.

The disclosed technology has been made in view of the above circumstances, and it is therefore an object of the disclosed technology to provide an apparatus and a method for use management capable of reducing labor of determining the propriety of use of a white space by the secondary system.

Solution to Problem

In one aspect of the disclosed embodiment, an input level to an amplifier that amplifies a first signal transmitted from a transmitter station of a primary system is calculated by adding second field intensity of a second signal to first field intensity of the first signal, the second signal being transmitted from a transmitter station of a secondary system with use of a white space of the primary system. The secondary system is authorized to use the white space when the input level is less than a saturation input level of the amplifier.

According to an aspect of the disclosure, the labor of determining the propriety of use of the white space by the secondary system can be reduced.

Brief Description of Drawings

FIG. 1 is a diagram illustrating one example of a communication system in a first embodiment.
FIG. 2 is a block diagram illustrating one example of a use management apparatus in the first embodiment.
FIG. 3 is an explanatory view illustrating use propriety determination in the first embodiment.
FIG. 4 is an explanatory view illustrating an acquisition example of field intensity in the first embodiment.
FIG. 5 is an explanatory view illustrating an acquisition example 3 of secondary system field intensity in the first embodiment.
FIG. 6 is an explanatory view illustrating the acquisition example 3 of the secondary system field intensity in the first embodiment.
FIG. 7 is an explanatory view illustrating a determination example 1 of use propriety of the white space in the first embodiment.
FIG. 8 is an explanatory view illustrating the determination example 1 of use propriety of the white space in the first embodiment.
FIG. 9 is an explanatory view illustrating the determination example 1 of use propriety of the white space in the first embodiment.
FIG. 10 is an explanatory view illustrating a determination example 2 of use propriety of the white space in the first embodiment.
FIG. 11 is an explanatory view illustrating the determination example 2 of use propriety of the white space in the first embodiment.
FIG. 12 is an explanatory view illustrating a determination example 3 of use propriety of the white space in the first embodiment.
FIG. 13 is an explanatory view illustrating the determination example 3 of use propriety of the white space in the first embodiment.
FIG. 14 is an explanatory view illustrating the determination example 3 of use propriety of the white space in the first embodiment.
FIG. 15 is an explanatory view illustrating a determination example 4 of use propriety of the white space in the first embodiment.
FIG. 16 is an explanatory view illustrating the determination example 4 of use propriety of the white space in the first embodiment.
FIG. 17 is a flow chart illustrating processing of the use management apparatus in the first embodiment.
FIG. 18 is an explanatory view illustrating processing of a use propriety determination unit in a second embodiment.
FIG. 19 is a block diagram illustrating one example of a use management apparatus in a sixth embodiment.
FIG. 20 is a flow chart illustrating processing of the use management apparatus in the sixth embodiment.
FIG. 21 is an explanatory view illustrating a determination example of use propriety of the white space in another embodiment.
FIG. 22 illustrates a hardware configuration example of the use management apparatus.

Embodiments for Carrying Out the Invention

Hereinafter, embodiments of an apparatus and a method for use management disclosed in this application will be described with reference to the drawings. The embodiments are not intended to limit the apparatus and method for use management disclosed in this application. In each of the embodiments, component members identical in function and steps identical in processing are designated by identical reference numerals to omit redundant description. Hereinafter, a television broadcasting system is described as one example of the primary system, and a broadband wireless access system is described as one example of the secondary system. However, the primary system and the secondary system are not limited thereto. The primary system may be a wireless system that preferentially uses a specific frequency band including a white space. The secondary system may be a wireless system that uses the white space in the specific frequency band preferentially used by the primary system.

[First Embodiment]

<Outline of use management system>

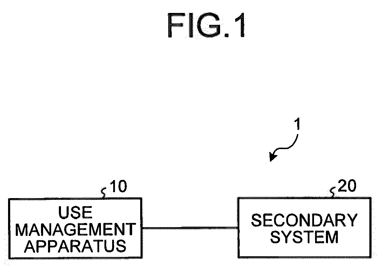

FIG. 1 is a diagram illustrating one example of a use management system in a first embodiment. In FIG. 1, a use management system 1 has a use management apparatus 10 and a secondary system 20. The use management apparatus 10 and the secondary system 20 are connected in a wired or wireless manner. The use management apparatus 10 determines the propriety of use of a white space by the secondary system 20, and reports the determination result to the secondary system 20.

<Configuration example of use management apparatus>

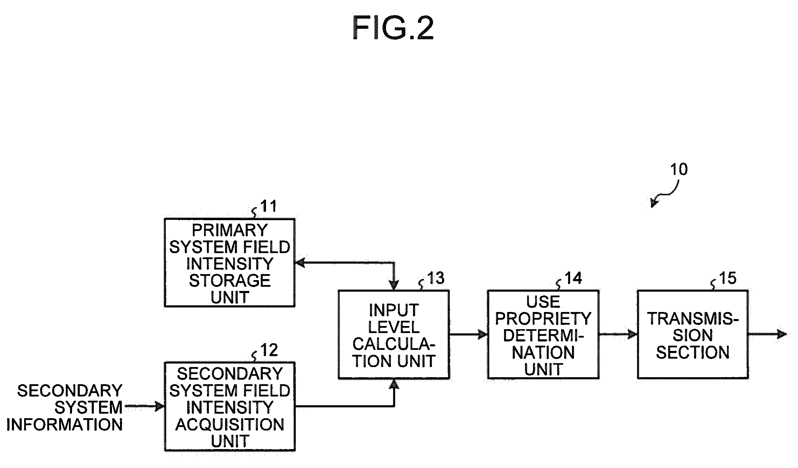

FIG. 2 is a block diagram illustrating one example of the use management apparatus in the first embodiment. In FIG. 2, the use management apparatus 10 has a primary system field intensity storage unit 11, a secondary system field intensity acquisition unit 12, an input level calculation unit 13, a use propriety determination unit 14, and a transmission unit 15.

The primary system field intensity storage unit 11 stores field intensity (which may hereinafter be referred to as "primary system field intensity") of a signal at each spot, the signal being transmitted from a transmitter station of the primary system (which may hereinafter be referred to as a "primary system transmitter station"). The primary system field intensity is acquired in advance by a simulation or actual measurement at each frequency channel. Hereinbelow, a signal transmitted from the primary system transmitter station may be referred to as a "primary system signal."

The secondary system field intensity acquisition unit 12 may receive information about the secondary system 20 (which may hereinafter be referred to as "secondary system information") input from the secondary system 20. The secondary system field intensity acquisition unit 12 also acquires, on the basis of the secondary system information, field intensity (which may hereinafter be referred to as "secondary system field intensity") of a signal at each spot, the signal being transmitted from a transmitter station of the secondary system 20 (which may hereinafter be referred to as "secondary system transmitter station"). The secondary system field intensity acquisition unit 12 outputs the acquired secondary system field intensity to the input level calculation unit 13. A method for acquiring the secondary system field intensity will be described later. Hereinafter, the signal transmitted from the secondary system transmitter station may be referred to as a "secondary system signal."

Here, the secondary system transmitter station transmits the secondary system signal with use of a white space in a frequency band including a frequency channel used for transmission of the primary system signal. In short, the secondary system transmitter station transmits the secondary system signal in the frequency band identical to that in the primary system.

The input level calculation unit 13 acquires the primary system field intensity from the primary system field intensity storage unit 11. The input level calculation unit 13 calculates an input level (which may hereinafter be referred to as a "booster input level") to the booster that amplifies the primary system signal. As described in the foregoing, the booster is an amplifier installed between a receiving antenna and a receiver in the house of a televiewer who receives a primary system signal to amplify the primary system signal. The input level calculation unit 13 calculates the booster input level by adding secondary system field intensity to primary system field intensity, and outputs the calculated booster input level to the use propriety determination unit 14.

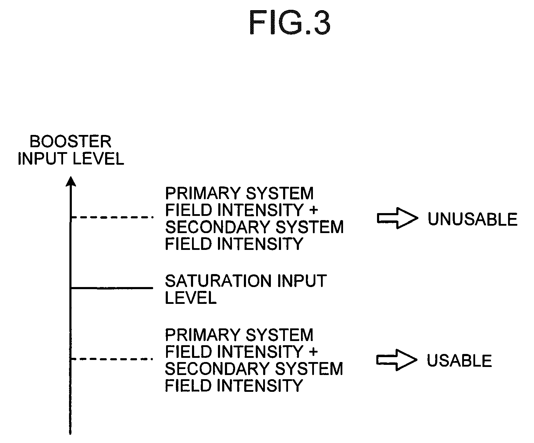

The use propriety determination unit 14 compares the booster input level calculated by the input level calculation unit 13 with a minimum booster input level (which may hereinafter be referred to as a "saturation input level") that saturates output power of the booster, and determines the propriety of use of the white space by the secondary system 20 on the basis of the comparison result. More specifically, as illustrated in FIG. 3, the use propriety determination unit 14 determines that the white space is usable by the secondary system 20 and authorizes the secondary system 20 to use the white space when the booster input level obtained by adding the secondary system field intensity to the primary system field intensity is less than the saturation input level. On the contrary, as illustrated in FIG. 3, the use propriety determination unit 14 determines that the white space is unusable by the secondary system 20 and does not authorize the secondary system 20 to use the white space when the booster input level obtained by adding the secondary system field intensity to the primary system field intensity is equal to or more than the saturation input level. FIG. 3 is an explanatory view illustrating use propriety determination in the first embodiment. The use propriety determination unit 14 generates a determination result report indicative of the use propriety, and outputs the report to the transmission unit 15.

The transmission unit 15 transmits the determination result report to the secondary system 20.

<Acquisition example of field intensity>

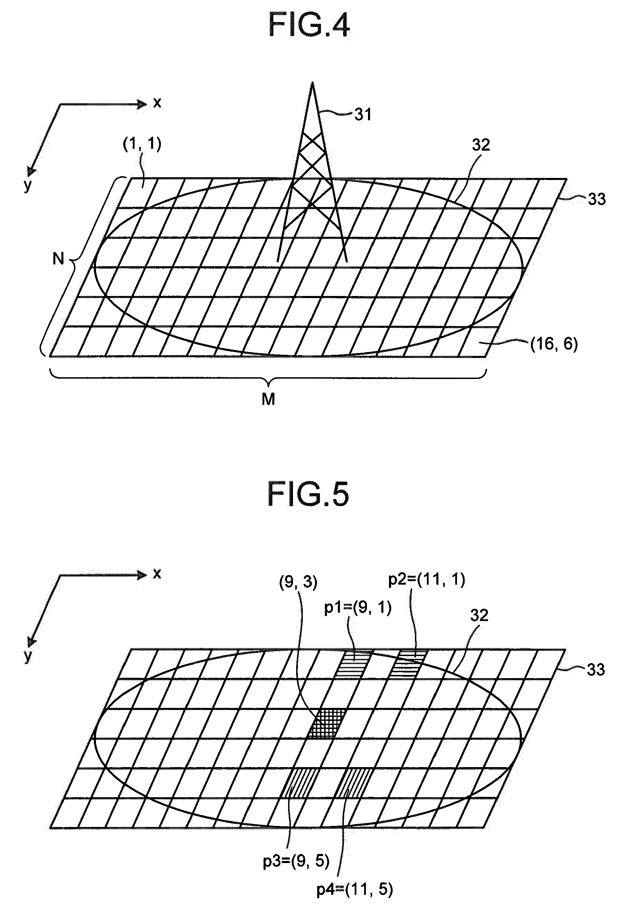

FIG. 4 is an explanatory view illustrating an acquisition example of field intensity in the first embodiment. Hereinafter, a term "transmission area" refers to "an arrival range of a transmission signal". In FIG. 4, a primary system transmitter station 31 forms a transmission area 32 of the primary system signal. In acquisition of the primary system field intensity and the secondary system field intensity, a virtual rectangular area 33 including the transmission area 32 is set. The rectangular area 33 is divided into a plurality of grids obtained by M x N where M represents the number of grids in the x axis and N represents the number of grids in the y axis. For example, one grid is equivalent to an area of a square of 100 m. Here, the rectangular area 33 of M = 16 and N = 6 is illustrated as an example. When a grid (1, 1) on an upper left end is set as an origin, a lower right end is occupied by a grid (16, 6).

The primary system field intensity in each frequency channel and in each grid is acquired in advance, and is stored in the primary system field intensity storage unit 11.

The secondary system field intensity is acquired by the secondary system field intensity acquisition unit 12 as indicated in the following acquisition examples 1 to 3.

<Acquisition example 1>

In the acquisition example 1, the secondary system field intensity acquisition unit 12 acquires the secondary system field intensity of each grid by a simulation using a propagation model. In the acquisition example 1, an installation location, an antenna height, and a transmission power value of the secondary system transmitter station are input into the secondary system field intensity acquisition unit 12 as secondary system information. The secondary system transmitter station is installed in any one of grids (1, 1) to (16, 6). The secondary system field intensity acquisition unit 12 calculates the secondary system field intensity in each of the grids (1, 1) to (16, 6) in accordance with the propagation model expressed by Expression (1). The propagation model indicated by Expression (1) is "TM-91 model" used for calculation of the secondary system field intensity by Federal Communications Commission (FCC) which conducts research on utilization of white spaces of television broadcasting. In Expression (1), "F" represents secondary system field intensity, "$h_1$" represents an antenna height of a secondary system transmitter station, "$h_2$" represents an antenna height of a receiver station of the secondary system signal, and "p" represents a transmission power value of the secondary system transmitter station. Also in Expression (1), "d" represents a distance from an installation location of the secondary system transmitter station to a grid serving as a calculation target of the secondary system field intensity, i.e., a propagation distance of the secondary system signal. It is to be noted that $h_2$ is a fixed value preset by the secondary system field intensity acquisition unit 12.

$$F = 141.4 - 2.15 + 20\log_{10}(h_1 h_2) - 40\log_{10}(d) + 10\log_{10}(p) \qquad (1)$$

When the secondary system field intensity of each grid is acquired by the simulation in this manner, the secondary system field intensity can be acquired more easily than the case where the secondary system field intensity is actually measured.

In the acquisition example 1, the field intensity is calculated by the simulation, and therefore calculated field intensity values may be smaller than actual values due to errors. In that case, the use propriety determination unit 14 may erroneously determine that the white space is usable by the secondary system 20. It is therefore preferable that the secondary system field intensity acquisition unit 12 adds a fixed margin to the secondary system field intensity F calculated in accordance with Expression (1).

<Acquisition example 2>

In an acquisition example 2, the secondary system field intensity acquisition unit 12 acquires secondary system field intensity obtained by actual measurement performed in each grid. More specifically, in the acquisition example 2, actual measurement values of the secondary system field intensity in each grid are input into the secondary system field intensity acquisition unit 12 as secondary system information. The secondary system field intensity of each grid is measured by the secondary system 20, and the actual measurement values are reported from the secondary system 20 to the use management apparatus 10 with use of the secondary system information.

When the secondary system field intensity of each grid is acquired by actual measurement in this manner, the secondary system field intensity can be acquired more accurately than the case where the secondary system field intensity is obtained by the simulation.

<Acquisition example 3>

In the acquisition example 3, the secondary system field intensity acquisition unit 12 acquires the secondary system field intensity of each grid by a simulation using a propagation model based on actual measurement values. In the acquisition example 3, an installation location of the secondary system transmitter station, and measurement points and actual measurement values of the secondary system field intensity are input into the secondary system field intensity acquisition unit 12 as secondary system information. The installation location of the secondary system transmitter station and each of the measurement points of the secondary system field intensity are in any one of the grids (1, 1) to (16, 6).

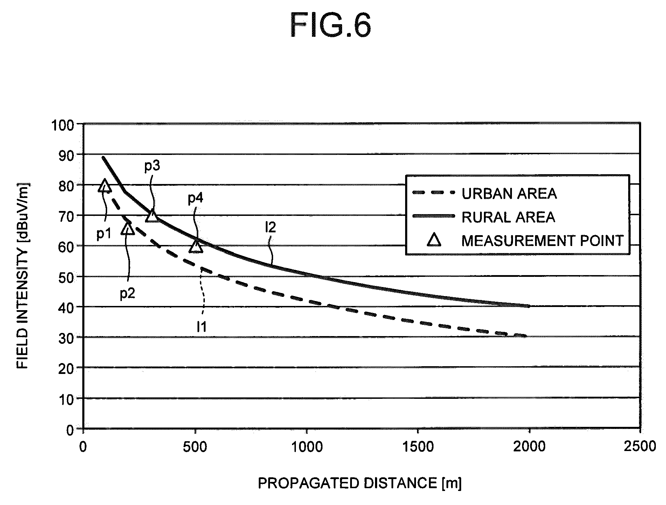

FIGS. 5 and 6 are explanatory views illustrating the acquisition example 3 of the secondary system field intensity in the first embodiment. For example, when the installation location of the secondary system transmitter station is set to a grid (9, 3), measurement points p1 to p4 of the secondary system field intensity are as illustrated in FIG. 5. That is, the point p1 is set to a grid (9, 1), the point p2 is set to a grid (11, 1), the point p3 is set to a grid (9, 5), and the point p4 is set to a grid (11, 5). In this setting, the field intensity measured at the measurement points p1 and p2 may be plotted in the vicinity of a line 11, while the field intensity measured at the measurement points p3 and p4 may be plotted in the vicinity of a line 12 as illustrated in FIG. 6. The vertical axis of FIG. 6 represents field intensity, and the horizontal axis represents a distance from the installation location of the secondary system transmitter station to each measurement point, i.e., a propagated distance of the secondary system signal.

Here, the lines 11 and 12 illustrated in FIG. 6 represent propagation curves of "Okumura-Hata model." The line 11 represents a propagation curve imitating a propagation situation in an urban area, while the line 12 represents a propagation curve imitating a propagation situation in a rural area. In FIG. 6, the propagation curves are obtained on the condition that the secondary system signal has a frequency of 620 MHz, the secondary system transmitter station has an antenna height of 10 m, and the receiver station of the secondary system signal has an antenna height of 10 m, for example.

In this setting, the secondary system field intensity acquisition unit 12 acquires the secondary system field intensity of each of the grids other than the measurement points p1 to p4 by a simulation using "Okumura-Hata model" illustrated in FIG. 6 on the basis of the actual measurement values at the measurement points p1 to p4. For example, the secondary system field intensity acquisition unit 12 acquires the secondary system field intensity of each of the grids other than the measurement points p1 to p4 on the basis of a grid (9, 3) as described below. That is, the secondary system field intensity acquisition unit 12 acquires the secondary system field intensity of each of the grids whose value in the y axis direction is "3" or less, i.e., each of the grids (x, 1) to (x, 3) except for the grids at the measurement points p1 and p2, by the simulation in accordance with the line 11. For example, the secondary system field intensity acquisition unit 12 also acquires the secondary system field intensity of each of the grids whose value in the y axis direction is larger than "3," i.e., each of the grids (x, 4) to (x, 6) except for the grids of the measurement points p3 and p4, by the simulation in accordance with the line 12.

When the propagation model based on actual measurement values is used in this manner, it becomes possible to obtain the secondary system field intensity of each grid by the simulation using the propagation model which is more approximated to an actual propagation environment. Therefore, precision of the simulation of the secondary system field intensity can be enhanced.

<Determination example of use propriety of white space>

Hereinafter, determination examples 1 to 4 of use propriety of a white space will be described. For example, in the determination examples 1 to 4, frequency channels used by the primary system are frequencies f1, f3, and f5 in a specific frequency band, and a white space used by the secondary system 20 is a frequency f2 in the specific frequency band including the frequencies f1, f3, and f5.

<Determination example 1>

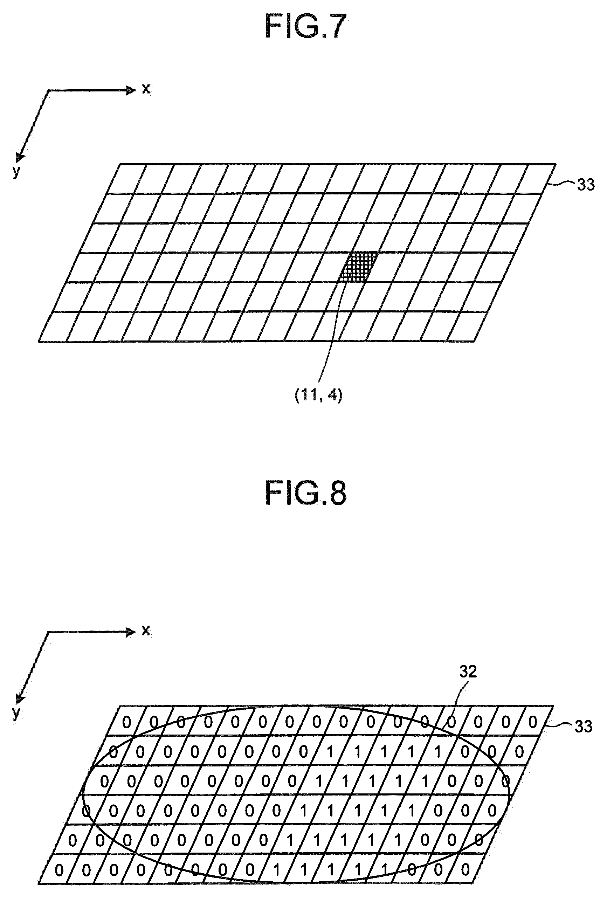

FIGS. 7 to 9 are explanatory views illustrating a determination example 1 of use propriety of the white space in the first embodiment.

In the determination example 1, as illustrated in FIG. 7, it is determined whether or not the white space is usable by the secondary system 20 in a grid (11, 4), i.e., whether or not the secondary system transmitter station can be installed in the grid (11, 4).

The secondary system field intensity acquisition unit 12 acquires the secondary system field intensity of all the grids included in the rectangular area 33, when the installation location of the secondary system transmitter station is the grid (11, 4).

The input level calculation unit 13 acquires from the primary system field intensity storage unit 11 the primary system field intensity of each grid at all the frequency channels (i.e., the frequencies f1, f3, and f5) used by the primary system. The input level calculation unit 13 calculates a total value of the primary system field intensity of each grid at all the frequency channels used by the primary system. Furthermore, the input level calculation unit 13 calculates a booster input level of each grid by adding the secondary system field intensity to the total value of the primary system field intensity.

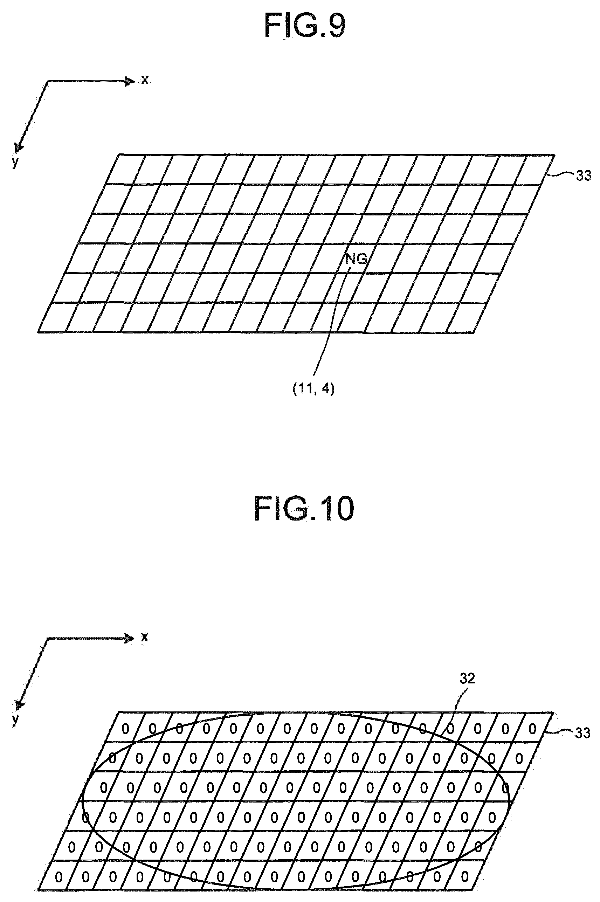

The use propriety determination unit 14 compares the booster input level of each grid calculated by the input level calculation unit 13 with a saturation input level. For example, a comparison result is as illustrated in FIG. 8. In FIG. 8, the grids with a booster input level less than the saturation input level are marked with "0," and the grids with a booster input level equal to or more than the saturation input level are marked with "1." More specifically, in the grids marked with "1," it is difficult to view television broadcasts provided by the primary system if the white space f2 is used by the secondary system 20. Accordingly, when the transmission area 32 of the primary system signal includes any one grid which has a booster input level equal to or more than the saturation input level, the use propriety determination unit 14 determines that the white space is unusable by the secondary system 20 and does not authorize the secondary system 20 to use the white space. Therefore, in this case, the use propriety determination unit 14 marks the grid (11, 4), which is the installation location of the secondary system transmitter station, with "NG" to indicate that the white space is unusable in that grid as illustrated in FIG. 9.

<Determination example 2>

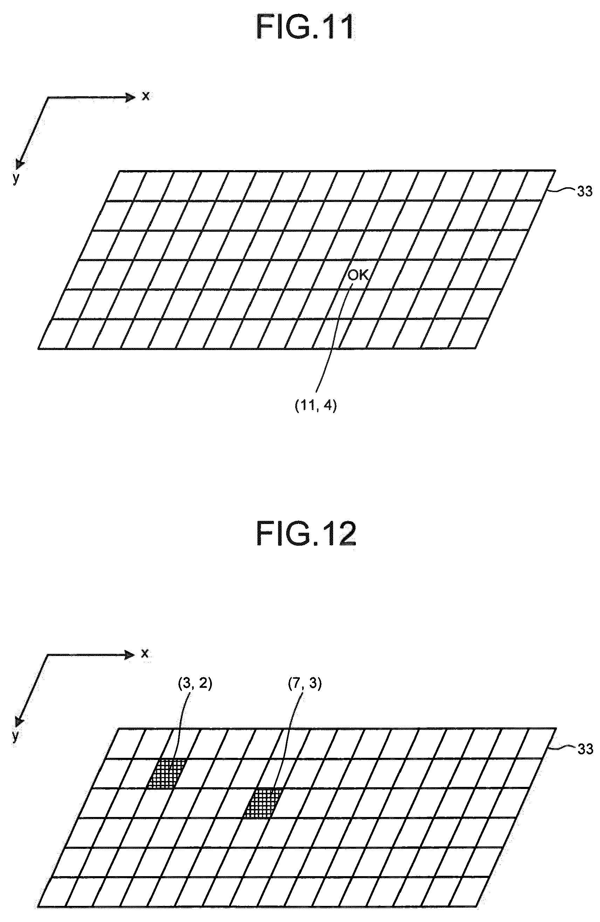

FIG. 10 and 11 are explanatory views illustrating a determination example 2 of the use propriety of the white space in the first embodiment.

When installation of the secondary system transmitter station in the grid (11, 4) is not authorized as in the determination example 1, it can be considered, in order to decrease the secondary system field intensity, to decrease the antenna height of the secondary system transmitter station or the transmission power of the secondary system signal in the same grid (11, 4). As a result of decreasing the antenna height or the transmission power, the result of comparing the booster input levels calculated by the input level calculation unit 13 with the saturation input level may become as illustrated in FIG. 10. In FIG. 10, there is no grid having a booster input level equal to or more than the saturation input level in the transmission area 32 of the primary system signal. In other words, the booster input level becomes less than the saturation input level in all the grids. That is, in FIG. 10, there is no grid in which users have difficulty in viewing television broadcasts provided by the primary system in the frequencies f1, f3, and f5 due to the use of the white space f2 by the secondary system 20. Accordingly, when the result of comparing the booster input levels with the saturation input level is as illustrated in FIG. 10, the use propriety determination unit 14 determines that the white space is usable by the secondary system 20 and authorizes the secondary system 20 to use the white space. Therefore, in this case, the use propriety determination unit 14 marks the grid (11, 4), which is the installation location of the secondary system transmitter station, with "OK" to indicate that the white space is usable in that grid as illustrated in FIG. 11.

<Determination example 3>

FIGS. 12 to 14 are explanatory views illustrating a determination example 3 of use propriety of the white space in the first embodiment.

In the determination example 3, it is determined whether or not the white space is usable by the secondary system 20 in a grid (3, 2) and a grid (7, 3), i.e., whether or not the secondary system transmitter station can be installed in the grid (3, 2) and the grid (7, 3) as illustrated in FIG. 12.

The secondary system field intensity acquisition unit 12 acquires the secondary system field intensity of each of all the grids included in the rectangular area 33 when the installation location of the secondary system transmitter station is the grid (3, 2). The secondary system field intensity acquisition unit 12 also acquires the secondary system field intensity of all the grids included in the rectangular area 33 when the installation location of the secondary system transmitter station is the grid (7, 3). The antenna height and the transmission power of the secondary system transmitter stations which are installed in the grid (3, 2) and the grid (7, 3) are set to be lower than those of the first embodiment, and the booster input levels do not reach the saturation input level only when any one of these secondary system transmitter stations is in operation.

The input level calculation unit 13 acquires from the primary system field intensity storage unit 11 the primary system field intensity of each grid at all the frequency channels (i.e., the frequencies f1, f3, and f5) used by the primary system. The input level calculation unit 13 calculates a total value of the primary system field intensity at all the frequency channels used by the primary system. Then, the input level calculation unit 13 calculates the booster input level in each grid by adding the secondary system field intensity in two installation locations, the grid (3, 2) and the grid (7, 3), to the total value of the primary system field intensity.

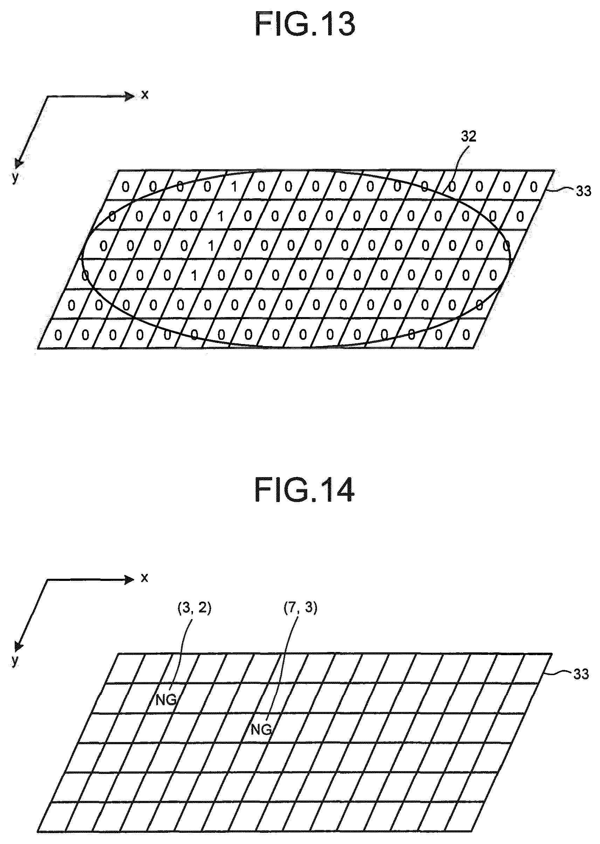

The use propriety determination unit 14 compares the booster input level of each grid calculated by the input level calculation unit 13 with the saturation input level. For example, the comparison result is as illustrated in FIG. 8. In this case, the grids not included in an overlapped area of a transmission area formed by the secondary system transmitter station of the grid (3, 2) and a transmission area formed by the secondary system transmitter station of the grid (7, 3) have low secondary system field intensity, and therefore their booster input levels are less than the saturation input level. On the contrary, the grids included in the overlapped are of the transmission area formed by the secondary system transmitter station of the grid (3, 2) and the transmission area formed by the secondary system transmitter station of the grid (7, 3) have high secondary system field intensity and their booster input levels are equal to or more than the saturation input level. That is, the overlapped area of these two transmission areas is equivalent to an area formed from the grids marked with "1" in FIG. 13.

Since there are grids having a booster input level equal to or more than the saturation input level in the transmission area 32 of the primary system signal, the use propriety determination unit 14 determines that the white space is unusable by the secondary system 20 and does not authorize the secondary system 20 to use the white space. Therefore, in this case, the use propriety determination unit 14 marks the grid (3, 2) and the grid (7, 3), which represent the installation locations of the secondary system transmitter stations, with "NG" to indicate the white space is unusable in these grids as illustrated in FIG. 14.

<Examination example 4>

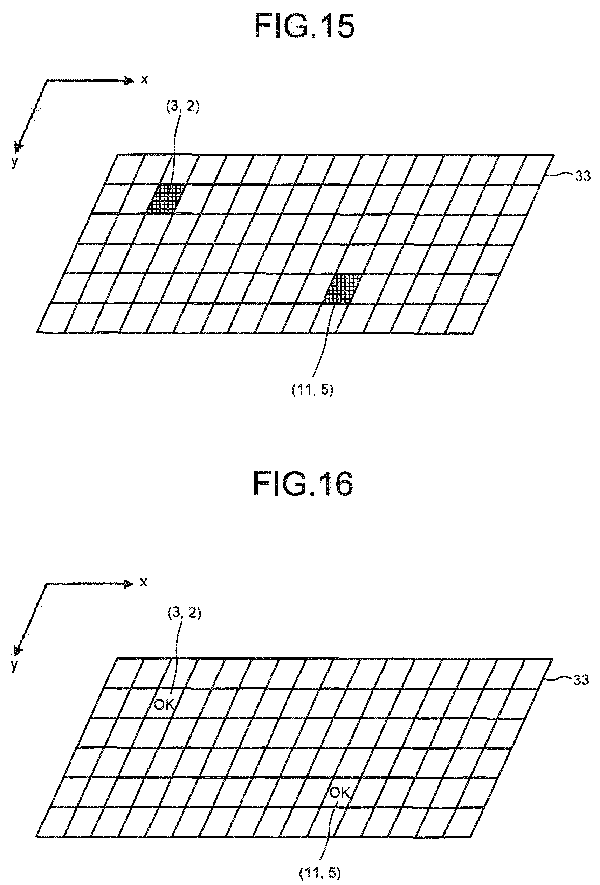

FIGS. 15 and 16 are explanatory views illustrating a determination example 4 of use propriety of the white space in the first embodiment.

When installation of the secondary system transmitter stations to the grid (3, 2) and the grid (7, 3) is not authorized as in the determination example 3, it can be considered to set a distance between these two secondary system transmitter stations to be longer than the distance in the case of the determination example 3 so as to eliminate the overlapped transmission area. For example, it is considered that while the installation location of one secondary system transmitter station is still set to be the grid (3, 2), the installation location of the other secondary system transmitter station may be changed from the grid (7, 3) to a grid (11, 5) as illustrated in FIG. 15. As a result of increasing the distance between the secondary system transmitter stations, the result of comparison between the booster input levels calculated by the input level calculation unit 13 and the saturation input level may become as illustrated in FIG. 10. In FIG. 10, there is no grid having a booster input level equal to or more than the saturation input level in the transmission area 32 of the primary system signal. Accordingly, the use propriety determination unit 14 determines that the white space is usable by the secondary system 20, and authorizes the secondary system 20 to use the white space. Therefore, in this case, the use propriety determination unit 14 marks both the grid (3, 2) and the grid (11, 5), which are the installation locations of the secondary system transmitter stations, with "OK" to indicate that the white space is usable in these grids as illustrated in FIG. 16.

<Processing of use management apparatus>

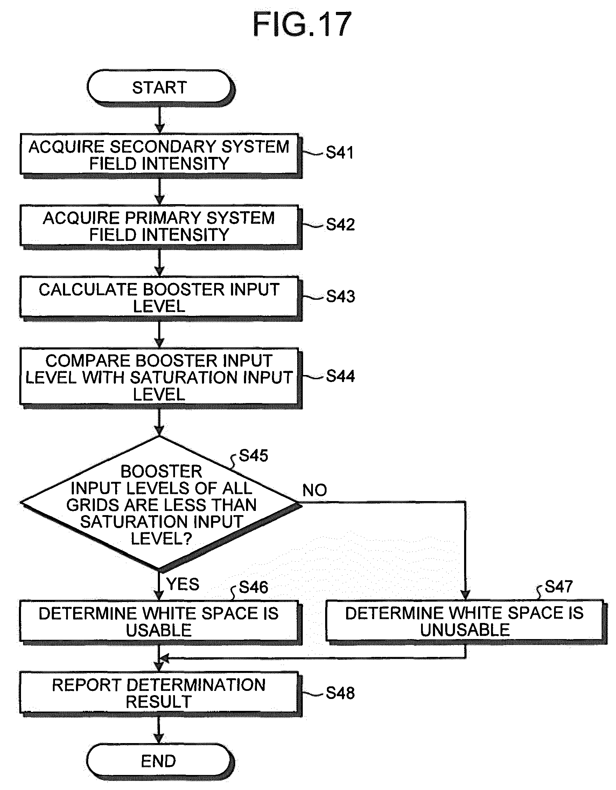

FIG. 17 is a flow chart illustrating processing of the use management apparatus in the first embodiment.

In the use management apparatus 10, the secondary system field intensity acquisition unit 12 acquires the secondary system field intensity of each grid (step S41).

The input level calculation unit 13 then acquires the primary system field intensity of each grid (step S42).

The input level calculation unit 13 then calculates a booster input level of each grid by adding the secondary system field intensity to the primary system field intensity (step S43).

Next, the use propriety determination unit 14 compares the booster input level of each grid with the saturation input level (step S44).

Then, the use propriety determination unit 14 determines, as a result of comparison in step S44, whether or not the booster input levels of all the grids are less than the saturation input level (step S45).

When the booster input levels of all the grids are less than the saturation input level (step S45: Yes), the use propriety determination unit 14 determines that the white space is usable by the secondary system 20 (step S46).

When the booster input level of any grid is equal to or more than the saturation input level (step S45: No), the use propriety determination unit 14 determines that the white space is unusable by the secondary system 20 (step S47).

The transmission unit 15 then reports the determination result made by the use propriety determination unit 14 to the secondary system 20 (step S48).

<Calculation example of booster input level>

In calculation of the booster input levels, it is preferable to take into consideration antenna gain of the receiving antenna, loss corresponding to an antenna effective length, feeder loss, and a terminal correction value. For example, when the primary system field intensity is 50 dBuV/m and the secondary system field intensity is 20 dBuV/m, the sum of the primary system field intensity and the secondary system field intensity is about 50 dBuV/m. Here, the input level calculation unit 13 calculates the booster input level as described below when the antenna gain of the receiving antenna is +10 dB, the loss corresponding to the antenna effective length is -17 dB, the feeder loss is -2 dB, and the terminal correction value is -6 dB. The saturation input level is generally about 75 dBuV.

```
Booster input level = 50 + 10 - 17 - 2 - 6 = 35 dBuV
```

As described in the foregoing, according to the present embodiment, the input level calculation unit 13 in the use management apparatus 10 calculates the input level to the booster that amplifies the primary system signal as described below. That is, the input level calculation unit 13 calculates the input level to the booster by adding to the primary system field intensity the secondary system field intensity of the secondary system signal transmitted with use of a white space of the primary system. When the input level to the booster is less than the saturation input level, the use propriety determination unit 14 authorizes the secondary system 20 to use the white space.

This makes it possible to omit the process of checking individual houses for the presence of the installed booster in determination of the propriety of use of the white space by the secondary system 20. Therefore, it becomes possible to reduce labor of determining the propriety of use of the white space by the secondary system 20.

[Second Embodiment]

The receiving antenna for television broadcasting has directivity, and the directivity is directed to the direction where the primary system transmitter station 31 is present. Therefore, a signal received from the direction where the primary system transmitter station 31 is present is different in antenna gain in the receiving antenna from a signal received from the direction where the primary system transmitter station 31 is not present. Accordingly, the use propriety determination unit 14 changes the saturation input level in accordance with an arrival direction of the secondary system signal.

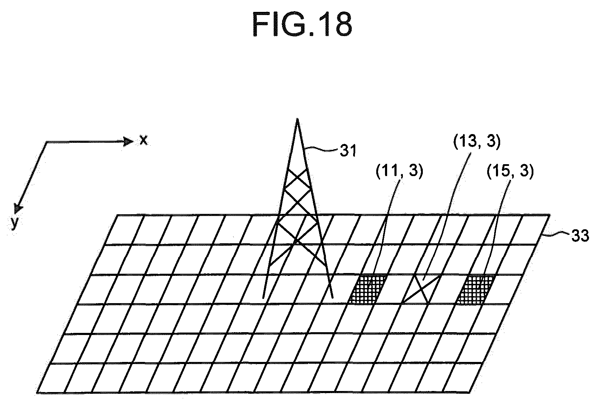

For example, consider the case of acquiring the secondary system field intensity in a grid (13, 3) when the installation location of the secondary system transmitter station is set to a grid (11, 3) or a grid (15, 3) as illustrated in FIG. 18. FIG. 18 is an explanatory view illustrating processing of the use propriety determination unit in the second embodiment. As viewed from the grid (13, 3), the grid (11, 3) is in a direction where the primary system transmitter station 31 is present, while the grid (15, 3) is in a direction where the primary system transmitter station 31 is not present. That is, in the grid (13, 3), an arrival direction of the secondary system signal from the grid (11, 3) is identical to the arrival direction of the primary system signal, whereas an arrival direction of the secondary system signal from the grid (15, 3) is opposite to the arrival direction of the primary system signal. Accordingly, the use propriety determination unit 14 changes the saturation input level in accordance with the arrival direction of the secondary system signal on the basis of the difference in antenna gain caused by the directivity of the receiving antenna. More specifically, in comparison between the booster input level and the saturation input level in each grid, the use propriety determination unit 14 uses a larger saturation input level for the grid (15, 3) than a saturation input level for the grid (13, 3). In "Yagi-Uda antennas" generally used as a receiving antenna for television broadcasting, the difference in gain caused by directivity is 15 dB or more. Accordingly, the use propriety determination unit 14 uses for the grid (15, 3) a saturation input level larger by 15 dB than the saturation input level for the grid (11, 3).

As described in the foregoing, according to the present embodiment, the use propriety determination unit 14 changes the saturation input level in accordance with the arrival direction of the secondary system signal. As a result, the arrival direction of the secondary system signal is reflected upon the result of comparison between the booster input level and the saturation input level. This makes it possible to determine the propriety of use of the white space by the secondary system 20 in consideration of difference in antenna gain caused by the directivity of the receiving antenna.

[Third embodiment]

As described in the determination example 2 in the first embodiment, the booster input levels in all the grids can be lowered to less than the saturation input level by decreasing the antenna height of the secondary system transmitter station or the transmission power of the secondary system signal to thereby decrease the secondary system field intensity.

Accordingly, in the present embodiment, in step S47 of FIG. 17, the use propriety determination unit 14 determines that the white space is unusable by the secondary system 20 and also calculates the antenna height or the transmission power which causes the booster input levels in all the grids to be less than the saturation input level. More specifically, when the use propriety determination unit 14 determines that the white space is unusable by the secondary system 20, the use propriety determination unit 14 calculates the antenna height of the secondary system transmitter station or the transmission power of the secondary system signal which enable the secondary system 20 to use the white space. For example, the use propriety determination unit 14 calculates the antenna height or the transmission power decreased in proportion to a portion of the booster input level that is over the saturation input level. The use propriety determination unit 14 outputs to the transmission unit 15 a determination result report that includes the calculated antenna height or transmission power.

In step S48 of FIG. 17, the transmission unit 15 transmits to the secondary system 20 the determination result report that includes a report about the decreased antenna height or transmission power.

The use propriety determination unit 14 may decrease both the antenna height and the transmission power to decrease the secondary system field intensity. In this case, the transmission unit 15 transmits to the secondary system 20 the determination result report including a report about the decreased antenna height and the decreased transmission power.

As described in the foregoing, according to the present embodiment, when any booster input level is equal to or more than the saturation input level, the transmission unit 15 reports to the secondary system 20 at least one of the transmission power of the secondary system signal and the antenna height of the secondary system transmitter station which causes the booster input level to be less than the saturation input level.

Accordingly, the secondary system 20 can acknowledge requirements to be met by the secondary system 20 to obtain use authorization of the white space, so that use of the white space by the secondary system 20 can be facilitated.

[Fourth Embodiment]

As described in the determination example 4 of the first embodiment, the distance between the secondary system transmitter stations is increased to eliminate the overlapped transmission area therebetween, so that the booster input levels in all the grids can be lowered to less than the saturation input level.

Accordingly, in the present embodiment, in step S47 of FIG. 17, the use propriety determination unit 14 determines that the white space is unusable by the secondary system 20 and also calculates the installation location which causes the booster input levels in all the grids to be less than the saturation input level. More specifically, when the use propriety determination unit 14 determines that the white space is unusable by the secondary system 20, the use propriety determination unit 14 calculates the installation location of the secondary system transmitter station (i.e., the location of a transmission source of the secondary system signal) which enables the secondary system 20 to use the white space. The use propriety determination unit 14 outputs to the transmission unit 15 a determination result report that includes the calculated installation location, i.e., the changed installation location.

In step S48 of FIG. 17, the transmission unit 15 transmits to the secondary system 20 the determination result report including a report about the changed installation location.

As described in the foregoing, according to the present embodiment, when any booster input level is equal to or more than the saturation input level, the transmission unit 15 reports to the secondary system 20 the location of the transmission source of the secondary system signal which causes the booster input level to be less than the saturation input level.

As a result, the secondary system 20 can acknowledge requirements to be met by the secondary system 20 to obtain use authorization of the white space, so that use of the white space by the secondary system 20 can be facilitated.

[Fifth Embodiment]

When a plurality of secondary systems 20 are present, acquisition of the secondary system field intensity by the simulation in the use management apparatus 10 increases processing load of the use management apparatus 10. Accordingly, it may take a long time to obtain the determination results of the use propriety of the white space for all the secondary systems 20.

Accordingly, in the present embodiment, each of the secondary systems 20 calculates the secondary system field intensity by the simulation described in the acquisition example 1 or 3 of the first embodiment, and reports the calculation result as secondary system information to the use management apparatus 10.

In the use management apparatus 10, the secondary system field intensity acquisition unit 12 acquires the secondary system field intensity calculated by each of the secondary systems 20.

As a result, the processing load of the use management apparatus 10 can be reduced. When the plurality of secondary systems 20 are present in particular, it becomes possible to reduce the time taken to obtain the determination results of the use propriety of the white space for all the secondary systems 20.

[Sixth Embodiment]

<Configuration example of use management apparatus>

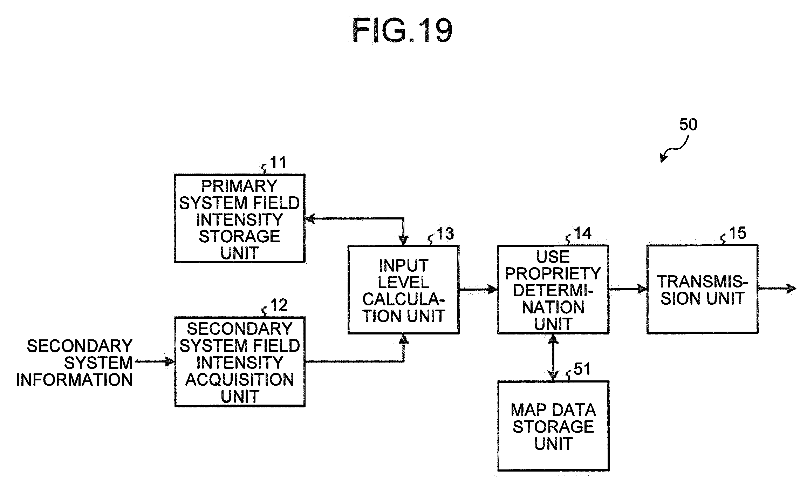

FIG. 19 is a block diagram illustrating one example of a use management apparatus in a sixth embodiment. In FIG. 19, a use management apparatus 50 has a map data storage unit 51.

The map data storage unit 51 includes map data which can discriminate the existence of houses.

As in the first embodiment, the use propriety determination unit 14 determines that the white space is usable by the secondary system 20, and authorizes the secondary system 20 to use the white space when the booster input levels are less than the saturation input level in all the grids in the transmission area 32 of the primary system signal.

However, the use propriety determination unit 14 acquires map data from the map data storage unit 51 when the transmission area 32 of the primary system signal includes any grid having a booster input level equal to or more than the saturation input level. The use propriety determination unit 14 then determines the propriety of use of the white space by the secondary system 20 on the basis of whether or not any house is present in the transmission area of the secondary system signal. Here, if no house is present in the transmission area of the secondary system signal, then no booster is present in the transmission area either. Accordingly, when no house is present in the transmission area of the secondary system signal, the use propriety determination unit 14 determines that the white space is usable by the secondary system 20, and authorizes the secondary system 20 to use the white space. Contrary to this, when any house is present in the transmission area of the secondary system signal, the use propriety determination unit 14 determines that the white space is unusable by the secondary system 20, and does not authorize the secondary system 20 to use the white space.

<Processing of use management apparatus>

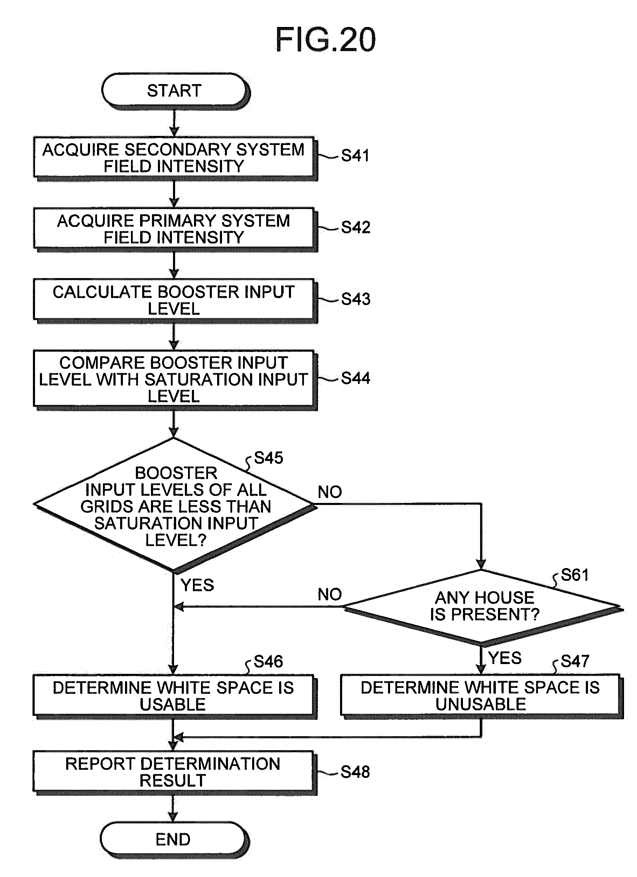

FIG. 20 is a flow chart illustrating processing of the use management apparatus in the sixth embodiment.

When the booster input level of any grid is equal to or more than the saturation input level (step S45: No), the use propriety determination unit 14 determines whether or not any house is present in the transmission area of the secondary system signal (step S61).

When no house is present in the transmission area of the secondary system signal (step S61: No), the use propriety determination unit 14 determines that the white space is usable by the secondary system 20 (step S46).

Contrary to this, when any house is present in the transmission area of the secondary system signal (step S61: Yes), the use propriety determination unit 14 determines that the white space is unusable by the secondary system 20 (step S47).

The map data may be stored in devices other than the map data storage unit 51. The map data may be stored in a server connected to the use management apparatus 50 through the Internet and the like, and the use propriety determination unit 14 may acquire the map data from the server.

As described in the foregoing, according to the present embodiment, the use propriety determination unit 14 determines the propriety of use of the white space by the secondary system 20 on the basis of whether any house is present in the transmission area of the secondary system signal, when the booster input level is more than the saturation input level.

As a result, it becomes possible to increase the opportunity of use of the white space by the secondary system 20 as compared to the case of the first embodiment.

[Seventh Embodiment]

There are grids in which the booster input level of only the primary system field intensity without the secondary system field intensity added thereto is equal to or more than the saturation input level. Such grids have a sufficiently large receiving level of the primary system signal. Therefore, it can be concluded that no booster is present in such grids. Accordingly, when the primary system field intensity is equal to or more than the saturation input level in all the grids in the transmission area 32 of the primary system signal, the use propriety determination unit 14 determines that the white space is usable by the secondary system 20 in irrespective of the secondary system field intensity, and authorizes the secondary system 20 to use the white space.

However, when it is determined whether or not the booster input level of only the primary system field intensity is equal to or more than the saturation input level, cable loss of a cable extending from the receiving antenna to the booster is preferably taken into consideration. This is because, when a distance from the receiving antenna to the booster is long, the cable loss increases and thereby the booster input level decreases. For example, when the primary system field intensity is set to 100 dBuV/m, the antenna gain of the receiving antenna is set to +10 dB, the loss corresponding to the antenna effective length is set to -17 dB, the feeder loss is set to -2 dB, the terminal correction value is set to -6dB, and the cable loss is set to -7.5 dB, the booster input level without the secondary system field intensity added thereto is calculated as described follows:

```
Booster input level
   = 100 + 10 - 17 - 2 - 6 - 7.5 = 77.5 dBuV
```

As described in the foregoing, according to the present embodiment, when the primary system field intensity is equal to or more than the saturation input level, the use propriety determination unit 14 authorizes the secondary system 20 to use the white space in irrespective of the secondary system field intensity.

As a result, it becomes possible to increase the opportunity of use of the white space by the secondary system 20 as compared to the case of the first embodiment.

[Other embodiments]

[1] In the case where a frequency f1 that is a frequency channel used by the primary system and a frequency f2 that is a white space used by the secondary system 20 are adjacent to each other, interference to the frequency f1 from the frequency f2 may occur due to the use of the white space. In order to prevent such interference between the frequency channels caused by use of the white space, the use propriety determination unit 14 preferably determines the propriety of use of the white space by the secondary system 20 in a following manner.

That is, the use propriety determination unit 14 calculates the transmission area of the secondary system signal on the basis of the secondary system field intensity. It is preferable that the use propriety determination unit 14 authorizes the secondary system 20 to use the white space when the transmission area of the secondary system signal and the transmission area 32 of the primary system signal do not overlap each other.

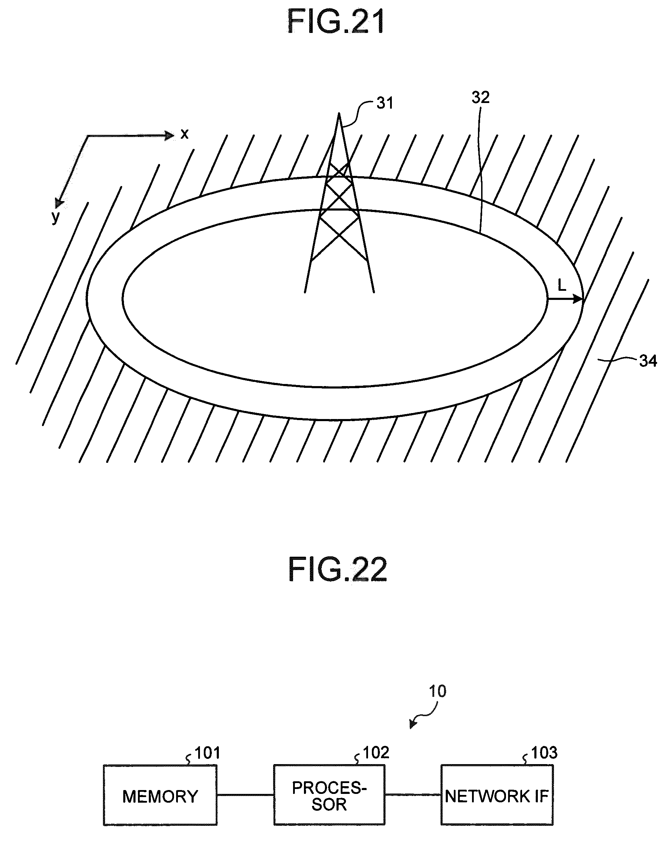

For example, the use propriety determination unit 14 calculates an area 34 distanced from the transmission area 32 of the primary system signal by a fixed separation distance L as illustrated in FIG. 21. The use propriety determination unit 14 then authorizes the secondary system 20 to use the white space, when the entire transmission area of the secondary system signal that uses the white space is included in the area 34. This makes it possible to prevent the transmission area of the secondary system signal transmitted with use of the white space from overlapping with the transmission area 32 of the primary system signal. Therefore, even when a white space adjacent to the frequency channel used by the primary system is used for transmission of the secondary system signal, occurrence of interference between the frequency channels can be prevented. FIG. 21 is an explanatory view illustrating a determination example of the propriety of use of the white space in another embodiment.

[2] The use management apparatus 10 may have a physical configuration different from the configuration illustrated in the drawings. That is, specific aspects of distribution and integration of each unit are not limited by illustrations, but the entirety or part thereof may functionally or physically be distributed and integrated in arbitrary units depending on various kinds of load, use conditions, and the like.

Furthermore, all or part of various processing functions performed by the use management apparatus 10 may be executed on a central processing unit (CPU) (or a microcomputer, such as a micro processing unit (MPU) and a micro controller unit (MCU)). Moreover, all or part of the various processing functions may be executed on a program analyzed and executed by a CPU (or a microcomputer such as MPUs or MCUs) or on wired logic hardware.

[3] The use management apparatus 10 may be implemented by the following hardware configuration, for example.

FIG. 22 illustrates a hardware configuration example of the use management apparatus. As illustrated in FIG. 22, the use management apparatus 10 has a memory 101, a processor 102, and a network interface (IF) 103. Examples of the memory 101 include random access memories (RAMs) such as synchronous dynamic random access memories (SDRAMs), read only memories (ROMs), and flash memories. Examples of the processor 103 include CPUs, digital signal processors (DSPs), and field programmable gate arrays (FPGAs).

The various processing functions performed by the use management apparatus 10 may be implemented by executing programs stored in various memories, such as nonvolatile storage media, by the processor 102. More specifically, programs corresponding to each of the processing executed by the secondary system field intensity acquisition unit 12, the input level calculation unit 13, and the use propriety determination unit 14 may be stored in the memory 101, and the programs may each be executed by the processor 102. The primary system field intensity storage unit 11 and the map data storage unit 51 are implemented by the memory 101. The transmission unit 15 is implemented by the network IF 103.

Explanation of Reference

| 10 | use management apparatus |
| 20 | secondary system |
| 11 | primary system field intensity storage unit |
| 12 | secondary system field intensity acquisition unit |
| 13 | input level calculation unit |
| 14 | use propriety determination unit |
| 15 | transmission unit |
| 51 | map data storage unit |

**Claims**

1. A use management apparatus comprising:

   a calculation unit that calculates an input level to an amplifier that amplifies a first signal transmitted from a transmitter station of a primary system, the input level being calculated by adding second field intensity of a second signal to first field intensity of the first signal, the second signal being transmitted from a transmitter station of a secondary system with use of a white space of the primary system; and
   a use propriety determination unit that authorizes the secondary system to use the white space when the input level is less than a saturation input level of the amplifier.

2. The use management apparatus according to claim 1, wherein the second field intensity is acquired by a simulation with use of a propagation model.

3. The use management apparatus according to claim 1, wherein the second field intensity is acquired by actual measurement.

4. The use management apparatus according to claim 1, wherein the second field intensity is acquired by a simulation with use of a propagation model based on an actual measurement value.

5. The use management apparatus according to claim 1, wherein the use propriety determination unit changes the saturation input level in accordance with an arrival direction of the second signal.

6. The use management apparatus according to claim 1, further comprising a transmission unit that reports to the secondary system at least one of transmission power of the second signal and an antenna height of the transmitter station that transmits the second signal when the input level is equal to or more than the saturation input level, the transmission power and the antenna height causing the input level to be less than the saturation input level.

7. The use management apparatus according to claim 1, further comprising a transmission unit that reports to the secondary system a location of a transmission source of the second signal when the input level is equal to or more than the saturation input level, the location causing the input level to be less than the saturation input level.

8. The use management apparatus according to claim 1, further comprising an acquisition unit that acquires the second field intensity calculated by the secondary system.

9. The use management apparatus according to claim 1, wherein the use propriety determination unit determines the propriety of use of the white space by the secondary system on the basis of whether or not any house is present in a transmission area of the second signal when the input level is equal to or more than the saturation input level.

10. The use management apparatus according to claim 1, wherein the use propriety determination unit authorizes the secondary system to use the white space in irrespective of the second field intensity when the first field intensity is equal to or more than the saturation input level.

11. A method for use management, the method comprising:

calculating an input level to an amplifier that amplifies a first signal transmitted from a transmitter station of a primary system, the input level being calculated by adding second field intensity of a second signal to first field intensity of the first signal, the second signal being transmitted from a transmitter station of a secondary system with use of a white space of the primary system; and
authorizing the secondary system to use the white space when the input level is less than a saturation input level of the amplifier.

# FIG.1

1

10

| USE MANAGEMENT APPARATUS |
|---|

20

| SECONDARY SYSTEM |
|---|

# FIG.2

# FIG.3

BOOSTER
INPUT LEVEL

PRIMARY SYSTEM
FIELD INTENSITY +
SECONDARY SYSTEM
FIELD INTENSITY ⇨ UNUSABLE

SATURATION INPUT
LEVEL

PRIMARY SYSTEM
FIELD INTENSITY +
SECONDARY SYSTEM
FIELD INTENSITY ⇨ USABLE

# FIG.4

# FIG.5

# FIG.6

# FIG.7

(11, 4)

# FIG.8

| | | | | | | | | | | | | | | |
|---|---|---|---|---|---|---|---|---|---|---|---|---|---|---|
|0|0|0|0|0|0|0|0|0|0|0|0|0|0|0|
|0|0|0|0|0|0|0|0|1|1|1|1|1|0|0|0|
|0|0|0|0|0|0|0|0|1|1|1|1|1|0|0|0|
|0|0|0|0|0|0|0|0|1|1|1|1|1|0|0|0|
|0|0|0|0|0|0|0|0|1|1|1|1|1|0|0|0|
|0|0|0|0|0|0|0|0|1|1|1|1|1|0|0|0|

32

33

# FIG.9

NG

(11, 4)

# FIG.10

# FIG.11

# FIG.12

# FIG.13

# FIG.14

# FIG.15

x

(3, 2)

y

33

(11, 5)

# FIG.16

x

(3, 2)

y

OK

33

OK

(11, 5)

# FIG.17

```
                    ┌──────────────┐
                    │    START     │
                    └──────┬───────┘
                           │
                           ▼
        ┌────────────────────────────────┐
        │  ACQUIRE SECONDARY SYSTEM       │── S41
        │       FIELD INTENSITY           │
        └────────────────┬───────────────┘
                         │
                         ▼
        ┌────────────────────────────────┐
        │  ACQUIRE PRIMARY SYSTEM         │── S42
        │       FIELD INTENSITY           │
        └────────────────┬───────────────┘
                         │
                         ▼
        ┌────────────────────────────────┐
        │  CALCULATE BOOSTER INPUT        │── S43
        │           LEVEL                 │
        └────────────────┬───────────────┘
                         │
                         ▼
        ┌────────────────────────────────┐
        │  COMPARE BOOSTER INPUT          │── S44
        │  LEVEL WITH SATURATION INPUT    │
        │           LEVEL                 │
        └────────────────┬───────────────┘
                         │
                         ▼
```

S45

BOOSTER INPUT LEVELS OF ALL GRIDS ARE LESS THAN SATURATION INPUT LEVEL?

NO

YES

S46

| DETERMINE WHITE SPACE IS USABLE |

S47

| DETERMINE WHITE SPACE IS UNUSABLE |

S48

| REPORT DETERMINATION RESULT |

```
                    ┌──────────────┐
                    │     END      │
                    └──────────────┘
```

# FIG.18

# FIG.19

EP 3 010 269 A1

# FIG.20

START

ACQUIRE SECONDARY SYSTEM FIELD INTENSITY — S41

ACQUIRE PRIMARY SYSTEM FIELD INTENSITY — S42

CALCULATE BOOSTER INPUT LEVEL — S43

COMPARE BOOSTER INPUT LEVEL WITH SATURATION INPUT LEVEL — S44

S45
BOOSTER INPUT LEVELS OF ALL GRIDS ARE LESS THAN SATURATION INPUT LEVEL?

NO

YES

S61
ANY HOUSE IS PRESENT?

NO

YES

DETERMINE WHITE SPACE IS USABLE — S46

DETERMINE WHITE SPACE IS UNUSABLE — S47

REPORT DETERMINATION RESULT — S48

END

# FIG.21

# FIG.22

## INTERNATIONAL SEARCH REPORT

| | International application No. |
|---|---|
| | PCT/JP2013/066386 |

### A. CLASSIFICATION OF SUBJECT MATTER
*H04W16/14(2009.01)i, H04W16/18(2009.01)i*

According to International Patent Classification (IPC) or to both national classification and IPC

### B. FIELDS SEARCHED

Minimum documentation searched (classification system followed by classification symbols)
H04W4/00-99/00

Documentation searched other than minimum documentation to the extent that such documents are included in the fields searched

| | | | | |
|---|---|---|---|---|
| Jitsuyo Shinan Koho | 1922-1996 | Jitsuyo Shinan Toroku Koho | 1996-2013 | |
| Kokai Jitsuyo Shinan Koho | 1971-2013 | Toroku Jitsuyo Shinan Koho | 1994-2013 | |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2013-5263 A (Hitachi Kokusai Electric Inc.), 07 January 2013 (07.01.2013), paragraphs [0002] to [0013], [0071] to [0093] & WO 2012/173231 A1 | 1-11 |
| A | JP 2012-182596 A (National Institute of Information and Communications Technology), 20 September 2012 (20.09.2012), entire text (Family: none) | 1-11 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 August, 2013 (22.08.13) | 03 September, 2013 (03.09.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 3 010 269 A1**

**REFERENCES CITED IN THE DESCRIPTION**

**Non-patent literature cited in the description**

- Cognitive radio: Brain-empowered wireless communications. **S. HAYKIN.** IEEE Journal on Selected Areas in Communications. 02 February 2005, vol. 23